# EUROPÄISCHE PATENTSCHRIFT

(11) **EP 3 417 150 B1**
(45) Veröffentlichungstag und Bekanntmachung des Hinweises auf die Patenterteilung: **26.08.2020**
(21) Anmeldenummer: 17708154.4
(22) Anmeldetag: 06.02.2017
(51) Int. Cl.: F01B 9/02, F03G 6/00, F01K 3/00, F01K 7/00, F02F 11/00, F02G 1/02, F02B 75/32, F16G 5/00, F16J 15/00, F01B 17/04

(54) **WÄRMEKRAFTMASCHINE, INSBESONDERE ORC-MOTOR**
HEAT ENGINE, IN PARTICULAR ORC ENGINE
MOTEUR THERMIQUE, EN PARTICULIER MOTEUR ORC

(30) Priorität: 16.02.2016 DE 102016102650
(43) Veröffentlichungstag der Anmeldung: 26.12.2018
(73) Patentinhaber: DeVeTec GmbH, 66386 St. Ingbert (DE)
(72) Erfinder: SCHNUR, Rainer, 66687 Morscholz (DE); HORBACH, Joscha, 66871 Konken (DE)
(74) Vertreter: Patentanwälte Bauer Vorberg Kayser
(86) Internationale Anmeldenummer: PCT/DE2017/100086
(87) Internationale Veröffentlichungsnummer: WO 2017/140297

(56) Entgegenhaltungen:
- EP-A2- 1 978 230
- DE-A1- 1 425 497
- DE-A1-102007 060 666
- DE-C- 322 765
- US-A- 3 230 941

## Beschreibung

Die Erfindung betrifft eine Wärmekraftmaschine, insbesondere einen ORC-Motor, mit einem Kurbelgehäuse und wenigstens einem mit dem Kurbelgehäuse verbundenen Arbeitszylinder, in dem ein starr mit einer Kolbenstange verbundener Arbeitskolben bewegbar und die Kolbenstange an ihrem dem Arbeitskolben abgewandten Ende über einen in Längsrichtung der Kolbenstange geführten Kreuzkopf gelenkig mit einer Pleuelstange verbunden ist.

Wärmekraftmaschinen, insbesondere ORC-Motoren, solcher Art, sind durch Benutzung bekannt, insbesondere solche, die auf herkömmlichen Verbrennungsmaschinen aufbauen, deren Zylinderbuchsen zur Führung des mit der Pleuelstange gelenkig verbindbaren Kreuzkopfes genutzt werden. Die Abkürzung ORC steht in dieser Anmeldung für Organic Rankine Cycle-Prozess.

In der DE 1 425 497 A1 ist eine Kolbenmaschine gezeigt, die als Viertakt-Verbrennungsmotor oder als Kompressor verwendet wird. Eine Kolbenstange wird zwischen einem Arbeitszylinder und einem Kurbelgehäuse durch zwei Durchgangsöffnungen durch eine Führung geführt. Eine Abdichtung der Durchgangsöffnungen ist nicht notwendig.

Die EP 1 978 230 A2 zeigt eine Wärmekraftanlage zur Nutzung von Wärmequellen niedriger Temperatur. In einen Arbeitsraum ist ein unter Druck stehendes Arbeitsmedium einleitbar. Der Arbeitsraum ist durch das Arbeitsmedium unter Verrichtung mechanischer Arbeit ausdehnbar, wobei das Arbeitsmedium ausschließlich unter Entspannung in den Arbeitsraum einschließbar ist.

Der vorliegenden Erfindung liegt die Aufgabe zugrunde, eine neue, bei geringem Schmierölverbrauch langfristig sicher und wartungsarm betreibbare Wärmekraftmaschine der eingangs erwähnten Art zu schaffen.

Die diese Aufgabe lösende Wärmekraftmaschine nach der Erfindung ist dadurch gekennzeichnet, dass der mit einem Arbeitsmedium beaufschlagte Innenraum (B) des Arbeitszylinders von dem mit Öl beaufschlagten Innenraum (A) des Kurbelgehäuses durch zwei, jeweils eine abgedichtete Durchführungsöffnung für die Kolbenstange aufweisende Wände abgetrennt ist, und dass zwischen den die Innenräume trennenden Wände ein Raum mit einer Öffnung gebildet ist.

Vorteilhaft lässt sich durch die beiden erfindungsgemäßen Trennwände mit jeweils einer abgedichteten Durchführungsöffnung für die Kolbenstange zuverlässig verhindern, dass ein geschlossener Kreislauf für das Arbeitsmedium, z. B. Ethanoldampf, durch Schmieröl kontaminiert und nach kurzer Betriebsdauer ein Austausch des Arbeitsmediums notwendig wird.

In einer bevorzugten Ausführungsform der Erfindung ist vorgesehen, dass der am unteren Totpunkt des Arbeitskolbens mit Öl benetzte Abschnitt der Kolbenstange am oberen Totpunkt des Arbeitskolbens bis maximal nur an die Durchführungsöffnung heranreicht, die dem mit dem Arbeitsmedium beaufschlagten Innenraum (B) zugewandt ist. Ölreste, die trotz Abdichtung der anderen Durchführungsöffnung mit der benetzten Kolbenstange aus dem Kurbelgehäuse herausgeführt werden, gelangen dann nicht bis an die Durchführungsöffnung am Arbeitszylinder heran, so dass keine Gefahr des Durchtritts von Öls und damit der Verunreinigung des Arbeitsmediums besteht.

In einer weiteren bevorzugten Ausführungsform der Erfindung weist die Kolbenstange eine in dem Raum (C) zwischen den Trennwänden angeordnete Ringsperre auf, um entlang der Kolbenstange kriechendes Öl abzufangen.

Diese Ringsperre kann selbst gegen die Kolbenstange abgedichtet sein und insbesondere Abrisskanten für Öl aufweisen.

Als Maßnahme, die den Austritt von Öl aus dem Kurbelgehäuse trotz Abdichtung der betreffenden Durchführungsöffnung verhindert, kann ferner vorgesehen sein, dass der Kreuzkopf auf seiner der Durchführung zugewandten Seite eine solche Formung aufweist, dass bei der Bewegung des Kolbens zum oberen Totpunkt durch den Kreuzkopf kein Öl in Richtung zu der Durchführungsöffnung geschleudert wird, sondern Öl von dem Kreuzkopf u. a. in der entgegengesetzten Richtung abfließen kann. Vorzugsweise weist die der betreffenden Durchführungsöffnung zugewandte Oberfläche des Kreuzkopfes eine konische Form auf.

Die Durchführungsöffnung, die dem durch das Arbeitsmedium beaufschlagten Innenraum (B) zugewandt ist, weist vorzugsweise eine Dichtung auf, die auch im Stillstand der Wärmekraftmaschine wirksam ist. Vorteilhaft kann diese Stillstandsdichtung mit einer Dichtung kombiniert sein, die erst bei Erwärmung der Wärmekraftmaschine auf Betriebstemperatur die Abdichtung der Durchgangsöffnung übernehmen kann, während die Stillstandsdichtung mit der Erwärmung auf Betriebstemperatur zunehmend ihre Dichtwirkung verliert.

Die Stillstandsdichtung kann ein ringförmiges Dichtungselement mit einer Wärmeausdehnung aufweisen, die größer als die Wärmeausdehnung der Kolbenstange ist, so dass eine Dichtlippe der Ringdichtung bei Betriebstemperatur von der Kolbenstange abgehoben ist.

In weiterer Ausgestaltung der Erfindung ist ein Tassenstößel eines Auslassventils des Arbeitszylinders gegen eine Führungsbuchse des Tassenstößels und damit der Arbeitsraum (B) des Arbeitskolbens gegen einen Innenraum (D) einer Zylinderkopfbaugruppe abdichtet. Die Zylinderkopfbaugruppe kann im Übrigen reibungsarm so ausgebildet sein, dass sie sich schmierölfrei betreiben lässt.

Die Erfindung wird nachfolgend anhand eines Ausführungsbeispiels und der beiliegenden, sich auf dieses Ausführungsbeispiel beziehenden Zeichnungen weiter erläutert. Es zeigen:
- Fig. 1: einen ORC-Motor nach der Erfindung in einer geschnittenen Seitenteilansicht,
- Fig. 2: eine in dem ORC-Motor von Fig. 1 verwendete Stillstandsdichtung, und
- Fig. 3 und 4: Teile einer Zylinderkopfbaugruppe des ORC-Motors von Fig. 1 in geschnittener Seitenansicht.

Ein ORC-Motor umfasst ein Kurbelgehäuse 1 und einen mit dem Kurbelgehäuse 1 verbundenen Arbeitszylinder 2. In dem Arbeitszylinder 2 ist ein Arbeitskolben 3 bewegbar, der starr mit einer Kolbenstange 4 verbunden ist. An ihrem dem Arbeitskolben 3 abgewandten Ende ist die Kolbenstange 4 über einen Kreuzkopf 5 gelenkig mit einer Pleuelstange 6 verbunden.

Der Kreuzkopf 5 bewegt sich in einer in dem Kurbelgehäuse 1 gebildeten Buchse 7 und ist innerhalb der Buchse 7 durch (nicht gezeigte) Führungsschienen in Längsrichtung der Kolbenstange 4 geführt.

Der zu der Buchse 7 koaxiale Arbeitszylinder 2 ist in dem gezeigten Beispiel mit dem Kurbelgehäuse 1 über ein Zwischengehäuse verbunden, das Gehäusewände 9 und 10 sowie eine Öffnung 11 aufweist. Die Gehäusewand 9 schließt den mit Öl beaufschlagten Innenraum A des Kurbelgehäuses 1 ab. Die Gehäusewand 10 verschließt einen Raum B des Arbeitszylinders 2, in welchen ein Arbeitsmedium gelangt, z. B. Ethanoldampf. Beide Wände 9, 10 weisen jeweils eine abgedichtete Durchführungsöffnung 12 bzw. 13 für die Kolbenstange 4 auf.

In der Durchgangsöffnung 12 der Gehäusewand 9 befindet sich eine Ringdichtung 14 aus Kunststoff, z. B. PTFE, oder aus Bronze, welche den Austritt von Öl aus dem Kurbelgehäuse 1 weitgehend verhindert. Eine konische, der Durchgangsöffnung 12 zugewandte Oberfläche 15 des Kreuzkopfes 5 sorgt von vornherein dafür, dass die bei der Bewegung des Arbeitskolbens 3 durch den Kreuzkopf in Richtung zu der Durchgangsöffnung 12 geschleuderte Ölmenge gering ist, indem das Öl von der konischen Oberfläche 15 nach außen und in entgegengesetzter Richtung ablaufen kann.

Die Ringdichtung 14 ist in einem demontierbaren Ansatz 8 an der Gehäusewand 9 gehalten.

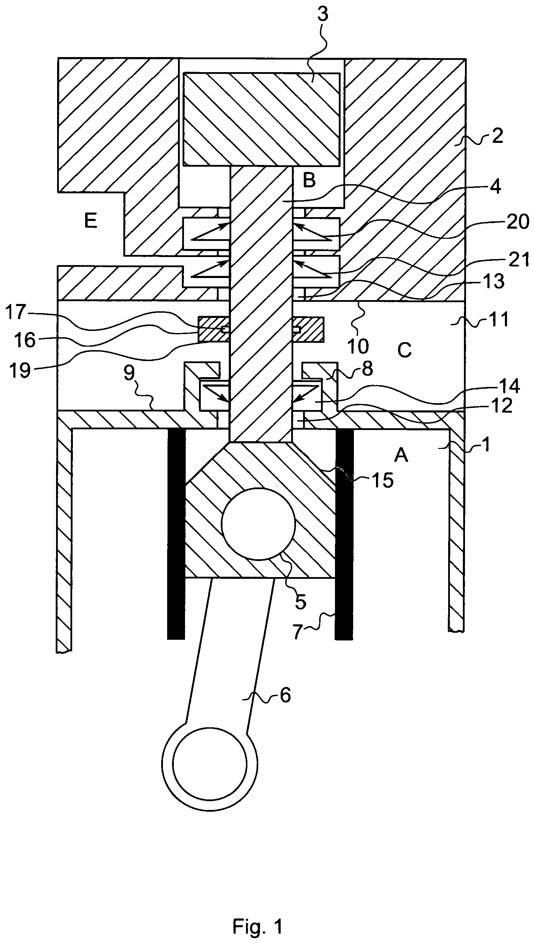

Innerhalb des zwischen den Gehäusewänden 9 und 10 gebildeten Raumes C ist auf der Kolbenstange 4 eine Ringsperre 16 angeordnet, welche trotz Abdichtung durch die Ringdichtung 14 ggf. aus dem Innenraum des Kurbelgehäuses 1 austretende Restmengen entlang der Kolbenstange 4 kriechenden Öls zurückhält. Wie Fig. 1 erkennen lässt, ist die Ringsperre 16 selbst durch eine Ringdichtung 17 gegen die Kolbenstange 4 abgedichtet und ein der Durchgangsöffnung 12 zugewandter Teil der Ringsperre 16 weist bei 19 mehrere konzentrische Ölabrisskanten auf.

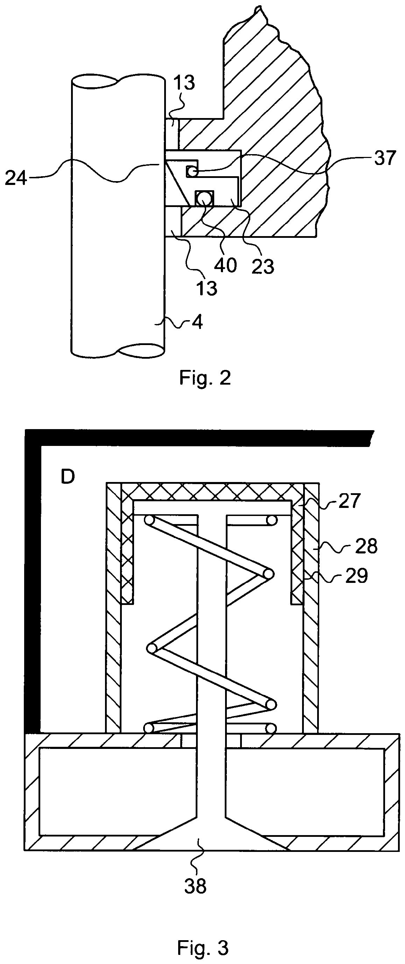

Zur gasdichten Abdichtung der Durchgangsöffnung 13 in der Gehäusewand 10 dient eine Ringdichtung 20, die mit einer bei Stillstand des ORC-Motors wirksamen, in Fig. 2 gesondert dargestellten Stillstandsdichtung 21 kombiniert ist. Um sicherzustellen, dass kein Ethanol an der Stillstandsdichtung vorbeiströmt, ist der Raum zwischen der Ringdichtung 20 und der Stillstandsdichtung 21 mit einem Raum E verbunden. Das Druckniveau von Raum E liegt unterhalb des Druckniveaus der Räume A, B und C.

Abweichend von der gezeigten Anordnung könnten die Dichtungen 20, 21 in einem tassenförmigen Ansatz untergebracht sein, der eine Ausbuchtung der Gehäusewand 10 bildet und sich gesondert von der übrigen Gehäusewand 10 demontierten lässt, ggf. über den Raum B. Auch die gesamte Dichtpackung 20,21 könnte durch den Raum B hindurch demontierbar sein.

Die Stillstandsdichtung 21 sorgt im Anfahrzustand des ORC-Motors, wenn die Betriebstemperatur noch nicht erreicht ist, für eine Abdichtung der Durchgangsöffnung 13, die nach Erreichen der Betriebstemperatur von der Ringdichtung 20 übernommen wird.

Wie Fig. 2 erkennen lässt, umfasst die Stillstandsdichtung 21 ein ringförmiges Dichtungselemente 23 aus PTFE mit einer Dichtlippe 24, die im kalten Zustand des ORC- Motors abdichtend gegen die Kolbenstange 4 anliegt, wobei der Anpressdruck der Dichtlippe 24 gegen die Kolbenstange 4 durch eine Ringfeder 37 verstärkt wird. Zur weiteren gasdichten Abdichtung dient ein Ringdichtungselement 40 aus Silikon.

Im Anfahrbetrieb des ORC-Motors erwärmt sich, u. a. durch Reibung, das Material des Dichtungselements 23, das einen deutlich größeren Ausdehnungskoeffizienten als das Material der Kolbenstange 4 aufweist. Dadurch hebt sich die Dichtlippe 24 von der Kolbenstange 4 ab. Mit der Erwärmung übernimmt zunehmend die ebenfalls mehrteilig ausgebildete Ringdichtung 20 die Abdichtung der Durchgangsöffnung 13. Im Betrieb unterliegt die Stillstandsdichtung 21 vorteilhaft keinem Verschleiß.

Ein in Fig. 3 gezeigtes Auslassventil in einer (in Fig. 1 nicht mit dargestellten) Zylinderkopfbaugruppe des Arbeitszylinders 2 umfasst einen Ventilteller 38 und einen zu dem Ventilteller 38 koaxialen Tassenstößel 27, der in einer Führungsbuchse 28 geführt ist. Eine Gleiteinlage 29 in der Führungsbuchse 28 sorgt neben einer Führung des Tassenstößels 27 für dessen Abdichtung gegen die Führungsbuchse 28. Der Innenraum B des Arbeitszylinders 2 ist dadurch gegen den Innenraum D der Zylinderkopfbaugruppe abgedichtet.

Um den Übertritt von Öl aus der Zylinderkopfbaugruppe in den Arbeitsraum B des Arbeitszylinders 2 gänzlich zu vermeiden, kann auf eine Ölschmierung der in Fig. 3 gezeigten Zylinderkopfbaugruppe verzichtet werden.

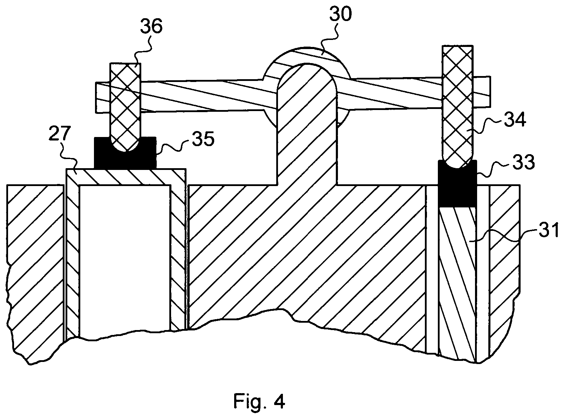

Wie aus Fig. 4 hervorgeht, umfasst die ohne Ölschmierung betreibbare Zylinderkopfbaugruppe einen Kipphebel 30, der durch eine Stößelstange 31 angesteuert wird und den Tassenstößel 27 betätigt. An der Stößelstange 31 ist eine mehrteilige Kugelpfanne befestigt, die einen Kugelpfanneneinsatz 33 umfasst. In die Kugelpfanne greift ein von dem Kipphebel 30 umfasster Kugelzapfen 34 ein. Die Betätigung des Tassenstößels 27 erfolgt über einen Gleitschuh 35, der über einen weiteren Kugelzapfen 36 mit dem Kipphebel 30 verbunden ist. Indem sich der Gleitschuh 35 senkrecht zur Bewegungsrichtung des Tassenstößels 27 verschieben kann, wird die Übertragung der rotatorischen Bewegung des Kipphebels 30 auf die lineare Bewegung des Tassenstößels 27 ermöglicht.

Durch die Form des Tassenstößels 27 werden innenliegende Komponenten vor im Betrieb anfallendem Abrieb von dem über dem Tassenstößel 27 angeordneten Gleitschuh 35 geschützt.

## Patentansprüche

1. Wärmekraftmaschine, insbesondere ORC-Motor, mit einem Kurbelgehäuse (1) und wenigstens einem mit dem Kurbelgehäuse (1) verbundenen Arbeitszylinder (2), in dem ein starr mit einer Kolbenstange (4) verbundener Arbeitskolben (3) bewegbar und die Kolbenstange (4) an ihrem dem Arbeitskolben (3) abgewandten Ende über einen in Längsrichtung der Kolbenstange (4) geführten Kreuzkopf (5) gelenkig mit einer Pleuelstange (6) verbunden ist,
**dadurch gekennzeichnet,**
**dass** der mit einem Arbeitsmedium beaufschlagte Innenraum (B) des Arbeitszylinders (2) von dem mit Öl beaufschlagten Innenraum (A) des Kurbelgehäuses (1) durch zwei, jeweils eine abgedichtete Durchführungsöffnung (12,13) für die Kolbenstange (4) aufweisende Wände (9,10) abgetrennt ist, und dass zwischen den die Innenräume (A, B) trennenden Wänden (9, 10) ein Raum (C) mit einer Öffnung (11) gebildet ist.

2. Wärmekraftmaschine nach Anspruch 1,
**dadurch gekennzeichnet,**
**dass** der am unteren Totpunkt des Arbeitskolbens (3) mit Öl benetzte Abschnitt der Kolbenstange (4) am oberen Totpunkt des Arbeitskolbens (3) bis maximal an die Durchführungsöffnung (13) heranreicht, die dem mit dem Arbeitsmedium beaufschlagten Innenraum (B) zugewandt ist.

3. Wärmekraftmaschine nach Anspruch 1 oder 2,
**dadurch gekennzeichnet,**
**dass** die Kolbenstange (4) eine in dem Raum (C) angeordnete Ringsperre (16) für entlang der Kolbenstange (4) kriechendes Öl aufweist.

4. Wärmekraftmaschine nach Anspruch 3,
**dadurch gekennzeichnet,**
**dass** die Ringsperre (16) Ölabrisskanten (19) aufweist und ggf. selbst gegen die Kolbenstange (4) durch eine Ringdichtung (17) abgedichtet ist.

5. Wärmekraftmaschine nach einem der Ansprüche 1 bis 4,
**dadurch gekennzeichnet,**
**dass** die Durchgangsöffnung (13), die dem durch das Arbeitsmedium beaufschlagten Innenraum (B) zugewandt ist, durch eine Dichtung (20,21) abgedichtet ist, die eine Stillstandsdichtung (21) umfasst.

6. Wärmekraftmaschine nach Anspruch 5,
**dadurch gekennzeichnet,**
**dass** die Stillstandsdichtung (21) ein sich ausdehnendes ringförmiges Dichtungselement (23) umfasst, dessen Dichtwirkung bei Betriebstemperatur der Wärmekraftmaschine aufgehoben ist.

7. Wärmekraftmaschine nach Anspruch 5 oder 6,
**dadurch gekennzeichnet,**
**dass** die die Stillstandsdichtung (21) umfassende Dichtung (20,21) in Verbindung mit einem Raum (E) steht, dessen Druckniveau unter dem der Räume (A), (B) und (C) liegt.

8. Wärmekraftmaschine nach einem der Ansprüche 1 bis 7,
**dadurch gekennzeichnet,**
**dass** der Kreuzkopf (5) auf seiner der betreffenden Durchgangsöffnung (12) zugewandten Seite eine bei Bewegung des Arbeitskolbens (3) zum oberen Totpunkt die Beaufschlagung der Durchgangsöffnung (12) mit Öl mindernde Formgebung aufweist, wobei der Kreuzkopf (5) eine konische Oberfläche (15) aufweist.

9. Wärmekraftmaschine nach einem der Ansprüche 1 bis 8,
**dadurch gekennzeichnet,**
**dass** die Wärmekraftmaschine eine Zylinderkopfbaugruppe ohne Ölschmierung umfasst.

## Claims

1. A heat engine, particularly an ORC engine, with a crankcase (1) and at least one working cylinder (2) that is connected to the crankcase (1), in which cylinder a working piston (3) that is rigidly connected to a piston rod (4) can be moved and the end of the piston rod (4) facing away from the working piston (3) is connected to a connecting rod (6) in an articulated manner by means of a crosshead (5) running in the longitudinal direction of the piston rod (4),
**characterized in**
**that** the interior (B) of the working cylinder (2), which is loaded with a working medium, is separated from the interior (A) of the crankcase (1), which is loaded with oil, by two walls (9, 10) that respectively have a sealing through-opening (12, 13) for the piston rod (4), and in that a space (C) with an opening (11) is formed between the walls (9, 10) separating the interiors (A, B).

2. The heat engine according to claim 1,
**characterized in**
**that** the section of the piston rod (4), which is wetted with oil at the bottom dead center of the working piston (3), extends at the top dead center of the working piston (3) no farther than the through-opening (13), which faces the interior (B) loaded with the working medium.

3. The heat engine according to claim 1 or 2,
**characterized in**
**that** the piston rod (4) has a ring barrier (16) for oil creeping along the piston rod (4), wherein said ring barrier is arranged in the space (C).

4. The heat engine according to claim 3,
**characterized in**
**that** the ring barrier (16) has oil stripping edges (19) and optionally is itself sealed relative to the piston rod (4) by a ring seal (17).

5. The heat engine according to one of claims 1 to 4,
**characterized in**
**that** the through-opening (13), which faces the interior (B) loaded by the working medium, is sealed by a seal (20, 21) that comprises a standstill seal (21).

6. The heat engine according to claim 5,
**characterized in**
**that** the standstill seal (21) comprises an expanding annular sealing element (23), the sealing effect of which is canceled at the operating temperature of the heat engine.

7. The heat engine according to claim 5 or 6,
**characterized in**
**that** the seal (20, 21) comprising the standstill seal (21) is connected to a space (E), the pressure level of which lies below the pressure level of the spaces (A), (B) and (C).

8. The heat engine according to one of claims 1 to 7,
**characterized in**
**that** the crosshead (5) has on its side facing the respective through-opening (12) a shape that reduces the application of oil on the through-opening (12) during a motion of the working piston (3) toward the top dead center, wherein the crosshead (5) has a conical surface (15).

9. The heat engine according to one of claims 1 to 8,
**characterized in**
**that** the heat engine comprises a cylinder head assembly without oil lubrication.

## Revendications

1. Moteur thermique, en particulier moteur à cycle organique de Rankine (COR), avec un carter moteur (1) et au moins un cylindre de travail (2) relié au carter moteur (1), dans lequel un piston de travail (3) relié de façon rigide à une tige de piston (4) est relié de façon mobile à une bielle (6) et la tige de piston (4) y est reliée à son extrémité opposée au piston de travail (3) de façon articulée par le biais d'une crosse (5) guidée en direction longitudinale de la tige de piston (4),
**caractérisé en ce que**
le compartiment intérieur (B) du cylindre de travail (2) sollicité par un milieu de travail est séparé du compartiment intérieur (A) du carter moteur (1) sollicité par l'huile par deux parois (9, 10) comportant respectivement une ouverture de passage étanchéifiée (12, 13) pour la tige de piston (4) et **en ce qu'**un compartiment (C) est formé avec une ouverture (11) entre les parois (9, 10) séparant les compartiments intérieurs (A, B).

2. Moteur thermique selon la revendication 1,
**caractérisé en ce que**
la section de la tige de piston (4) mouillée d'huile au point mort bas du piston de travail (3) atteint au point mort haut du piston de travail (3) au maximum l'ouverture de passage (13), qui est tournée vers le compartiment intérieur (B) sollicité par le milieu de travail.

3. Moteur thermique selon la revendication 1 ou 2,
**caractérisé en ce que**
la tige de piston (4) comporte un élément de blocage annulaire (16) disposé dans le compartiment (C) pour l'huile grimpant le long de la tige de piston (4).

4. Moteur thermique selon la revendication 3,
**caractérisé en ce que**
l'élément de blocage annulaire (16) comporte des bords de décrochement d'huile (19) et est le cas échéant étanchéifié lui-même contre la tige de piston (4) par un joint d'étanchéité annulaire (17).

5. Moteur thermique selon l'une quelconque des revendications 1 à 4,
**caractérisé en ce que**
l'ouverture de passage (13), qui est tournée vers le compartiment intérieur (B) sollicité par le milieu de travail, est étanchéifié par un joint d'étanchéité (20, 21) qui comprend un joint d'étanchéité d'arrêt (21).

6. Moteur thermique selon la revendication 5,
**caractérisé en ce que**
le joint d'étanchéité d'arrêt (21) comprend un élément d'étanchéité (23) de forme annulaire se dilatant, dont l'effet étanchéifiant est réhaussé à la température de fonctionnement du moteur thermique.

7. Moteur thermique selon la revendication 5 ou 6,
**caractérisé en ce que**
le joint d'étanchéité (20, 21) comprenant le joint d'étanchéité d'arrêt (21) est en liaison avec un compartiment (E) dont le niveau de pression se situe en dessous de celui des compartiments (A), (B) et (C).

8. Moteur thermique selon l'une quelconque des revendications 1 à 7,
**caractérisé en ce que**
la crosse (5) comporte sur son côté tourné vers l'ouverture de passage (12) concernée une conformation réduisant la sollicitation de l'ouverture de passage (12) par l'huile lors de la course du piston de travail (3) vers le point mort haut, sachant que la crosse (5) comporte une surface conique (15).

9. Moteur thermique selon l'une quelconque des revendications 1 à 8,
**caractérisé en ce que**
le moteur thermique comprend un ensemble de culasse sans lubrification d'huile.
